# EUROPÄISCHE PATENTSCHRIFT

(11) **EP 3 111 523 B1**
(45) Veröffentlichungstag und Bekanntmachung des Hinweises auf die Patenterteilung: **18.12.2019**
(21) Anmeldenummer: 15713832.2
(22) Anmeldetag: 10.02.2015
(51) Int. Cl.: H02B 1/01

(54) **ECKVERBINDER ZUM VERBINDEN MINDESTENS ZWEIER SENKRECHT ZUEINANDER ANGEORDNETER RAHMENPROFILE EINES RAHMENGESTELLS**
CORNER CONNECTOR FOR CONNECTING AT LEAST TWO ORTHOGONAL ARRANGED PROFILES OF A FRAME STRUCTURE
CONNECTEUR DE COIN POUR CONNECTER AU MOINS DEUX PROFILÉS ORTHOGONALES D'UN CHÂSSIS

(30) Priorität: 25.02.2014 DE 102014102464
(43) Veröffentlichungstag der Anmeldung: 04.01.2017
(73) Patentinhaber: RITTAL GmbH & Co. KG, 35745 Herborn (DE)
(72) Erfinder: SCHINDLER, Timo, 35649 Bischoffen (DE)
(74) Vertreter: Angerhausen, Christoph
(86) Internationale Anmeldenummer: PCT/DE2015/100052
(87) Internationale Veröffentlichungsnummer: WO 2015/127925

(56) Entgegenhaltungen:
- WO-A2-2012/039689
- DE-A1- 2 912 945
- DE-U1- 29 712 998
- US-A1- 2009 001 863

## Beschreibung

Die Erfindung betrifft einen Eckverbinder zum Verbinden mindestens zweier senkrecht zueinander angeordneter Rahmenprofile eines Rahmengestells, der aus mehreren Teilen besteht, von denen wenigstens eines zur Anlage an eines oder mehrere der Rahmenprofile ausgelegt und ein erstes Blechformteil mit einer Aufnahmeöffnung ist, in der oder an der eine Gewindehülse sitzt, wobei die Gewindehülse in der Aufnahmeöffnung verpresst oder in oder an der Aufnahmeöffnung verschweißt ist, wobei das erste Blechformteil zumindest zwei von einem Zentralstück ausgehende, senkrecht zueinander stehende Schenkel zum Eingriff in jeweilige Rahmenprofile und zur Anlage an wenigstens eine Innenwand eines jeweiligen Rahmenprofils aufweist, wobei die Aufnahmeöffnung in das Zentralstück gezogen ist, und wobei ein zweites Blechformteil vorhanden ist, das eine Referenzfläche für das Zentralstück des ersten Blechformteils aufweist. Ein derartiger Eckverbinder ist aus der DE 29 12 945 A1 bekannt.

Ein ähnlicher Eckverbinder ist aus der DE 103 28 408 A1 bekannt. Dort sollen drei senkrecht zueinander stehende Rahmenstangen verbunden werden, um einen Schaltschrank, insbesondere einen Niederspannungsschaltschrank, aufzubauen. Ein dazu verwendeter Eckverbinder ist zweiteilig ausgebildet, wobei beide Teile je drei senkrecht zueinander stehende Arme aufweisen, zwischen denen die Rahmenstangen festklemmbar sind. In einem Eckbereich zwischen den Schenkeln befindet sich ein Durchgangsloch, durch das eine Schraube hindurchgesteckt werden kann, die dann in eine Gewindebohrung am anderen Teil einschraubbar ist, wenn die Rahmenstangen verspannt werden sollen. Bei diesem Eckverbinder besteht das Problem, dass die Rahmenstangen manuell in eine definierte Position gebracht werden müssen, bevor sie verspannt werden können.

Es ist daher die Aufgabe der Erfindung, einen Eckverbinder zur Verfügung zu stellen, bei dem das präzise Ausrichten der Rahmenprofile ohne großen Aufwand gelingt. Ferner soll der Eckverbinder durch einfache Umformprozesse herzustellen sein.

Demgemäß ist vorgesehen, dass die Referenzfläche eine weitere Aufnahmeöffnung aufweist, die in ihren Abmessungen der Aufnahmeöffnung des ersten Blechformteils entspricht, und dass die Gewindehülse in der weiteren Aufnahmeöffnung der Referenzfläche verpresst oder an der oder in der weiteren Aufnahmeöffnung verschweißt ist. Die Schenkel können dabei unterschiedliche Ausprägungen haben und richten sich in ihrer Gestaltung nach den Rahmenprofilen, für deren Verbindung sie sorgen sollen.

Damit ist ein Eckverbinder geschaffen, der schon in dieser einfachen Ausgestaltung zur Verbindung beispielsweise zweier Horizontalprofile eines Rahmengestells eingesetzt werden kann.

Weiter vorteilhaft geht von der Referenzfläche wenigstens ein Schenkel zum Eingriff in ein drittes Rahmenprofil aus, das im Regelfall ein vertikales Rahmenprofil ist. Vertikale Rahmenprofile sind oftmals Hohlkammerprofile mit zwei Hohlkammern, wie beispielsweise in der DE 195 36 950 C1 beschrieben, bei denen die senkrecht zueinander stehenden Profilaußenseiten durch entsprechende Profilabschnitte jeder Hohlkammer gebildet sind. Bevorzugt sind bei dem Eckverbinder daher zwei derartige Schenkel vorgesehen, die senkrecht zueinander angeordnet sind, so dass eine sichere Positionierung eines solchen vertikalen Rahmenprofils möglich wird.

Auch kann dieser wenigstens eine Schenkel einen Durchzug, insbesondere einen Gewindedurchzug, aufweisen. Wenn der Gewindedurchzug bei aufgesetztem vertikalen Rahmenprofil von außen zugänglich ist, kann er Gewindebolzen, Schrauben oder dergleichen aufnehmen, die zur Anreihung an ein weiteres Rahmengestell, zum Anbringen von Flachteilen usw. erforderlich sind.

Zur Stabilität eines Eckverbinders dieser Variante können die Schenkel des ersten Blechformteils dabei vorteilhaft abgekantet sein, was ihre Verwindungssteifigkeit verbessert.

Nach einer bevorzugten Ausführungsform weisen die Schenkel oder die abgekanteten Bereiche der Schenkel weiter abgekantete Laschen auf, und es ist die Referenzfläche auf einer Zentralplatte gebildet, die so konturiert ist, dass sie auf den Laschen des ersten Blechformteils liegt. Damit ist eine genaue Positionierung des ersten Blechformteils in Bezug auf das zweite Blechformteil gewährleistet.

Die Zentralplatte des zweiten Blechformteils kann außerdem einen Durchbruch aufweisen, der bei auf den Eckverbinder aufgesetzten Rahmenprofilen zugänglich bleibt.

Die erfindungsgemäßen Eckverbinder sind als innenliegende Eckverbinder gestaltet, die von den aufgesetzten Rahmenprofilen im Wesentlichen umschlossen sind.

Im Folgenden soll die Erfindung anhand der beigefügten Zeichnung näher erläutert werden. Die Darstellungen in den Figuren sind dabei nicht notwendigerweise maßstabsgetreu. Es zeigt:
- Fig. 1: einen Eckverbinder gemäß der vorliegenden Erfindung in einer Explosionsdarstellung;
- Fig. 2: den Eckverbinder der Fig. 1 in einem zusammengesetzten Zustand;
- Fig. 3: den Eckverbinder gemäß Fig. 2, vorbereitet zum Verbinden dreier Rahmenprofile;
- Fig. 4: eine Modifikation des Eckverbinders gemäß den Figuren 1-3;
- Fig. 5: den Eckverbinder der Fig.4 in einem zusammengesetzten Zustand;

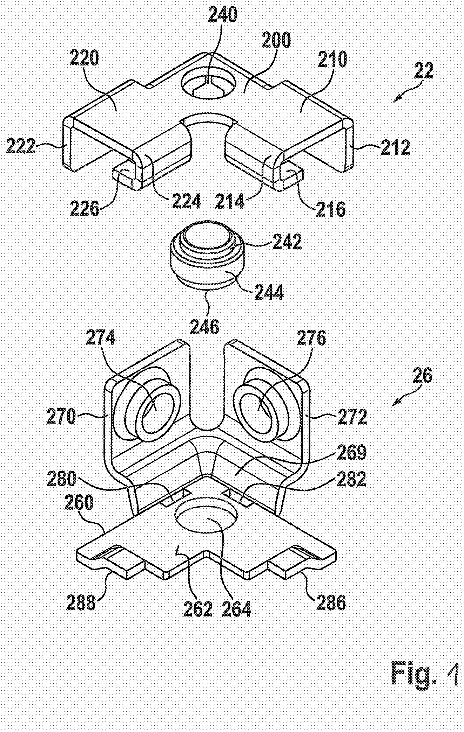

Fig. 1 zeigt einen Eckverbinder 20 gemäß der vorliegenden Erfindung in einer Explosionsdarstellung. Der Eckverbinder 20 besteht aus einem ersten Blechformteil 22, einer Gewindehülse 24 und einem zweiten Blechformteil 26. Das Blechformteil 22 weist, ausgehend von einem Zentralstück 200, zwei unter einem Winkel von 90° stehende Schenkel 210, 220 auf, deren ebene Oberseiten mit dem Zentralstück 200 fluchten. Die Schenkel 210, 220 sind jeweils abgekantet, wobei voneinander weg weisende abgekantete Bereiche 212, 222 der jeweiligen Schenkel 210, 220 unter einem Winkel von etwa 90° vom Zentralstück 200 ragen. Die zueinander weisenden abgekanteten Bereiche 214, 224 der Schenkel 210, 220 ragen ebenfalls unter einem Winkel von 90° vom Zentralstück 200, sind aber dann nochmals zu einer Lasche 216, 226 abgekantet, wobei die jeweilige Lasche 216, 226 zum gegenüberliegenden abgekanteten Bereich 212, 222 weist. Im Zentralstück 200 ist weiterhin eine Aufnahmeöffnung 240 vorhanden, in die die Gewindehülse 24 eingesetzt wird. Das zweite Blechformteil 26 weist eine Zentralplatte 260 auf, deren Oberfläche im zusammengebauten Zustand des Eckverbinders 20 eine Referenzfläche 262 für das Zentralstück 200 des ersten Blechformteils 22 bildet. In der Zentralplatte 260 ist eine Aufnahmeöffnung 264 gebildet, die in ihren Abmessungen der Aufnahmeöffnung 240 des ersten Blechformteils 22 entspricht und die ebenfalls zur Aufnahme der Gewindehülse 24 vorgesehen ist. Die Gewindehülse 24 weist zwei gegenüberstehende Zentrierbunde 242, 246 auf, die durch einen Mittelbereich 244 verbunden sind. Die Gewindehülse 24 kann daher beim Zusammenbau in die Aufnahmeöffnungen 240 und 264 greifen und dort verpresst oder verschweißt werden. Im zusammengebauten Zustand des Eckverbinders 20 ist die Gewindehülse 24 durch die Aufnahmeöffnung 240 und die Aufnahmeöffnung 264 zugänglich ist und kann damit für eine Kranöse oder für die Sockelbefestigung genutzt werden. Von der Zentralplatte 260 des zweiten Blechformteils 26 gehen zwei auf einem gewinkelten Basisabschnitt 269 angeordnete Schenkel 270, 272 aus, die für den Eingriff in ein Rahmenprofil, insbesondere in ein vertikal anzuordnendes Rahmenprofil, ausgelegt sind. Jeder der Schenkel 270, 272 weist einen Durchzug 274, 276, insbesondere einen Gewindedurchzug auf, in die Gewindebolzen, Schrauben oder dergleichen für die Anreihung mehrerer Rahmengestelle oder das Anbringen von Flachteilen aufgenommen werden können. Die Zentralplatte 260 umfasst weiterhin nahe den Schenkeln 270, 272 jeweils eine Ausnehmung 280, 282, in die am ersten Blechformteil 22 vorgesehene Nasen (nicht gezeigt) für die exakte Positionierung von dem ersten Blechformteil 22 und dem zweiten Blechformteil 26 relativ zueinander eingesetzt werden. Den Schenkeln 270, 272 gegenüberliegend sind jeweils angehobene Bereiche 286, 288 der Zentralplatte vorgesehen, die beim Zusammenbau von den Laschen 216, 226 des ersten Blechformteils 22 untergriffen werden. Damit ist die Lagegenauigkeit aller Teile des Eckverbinders 20 relativ zueinander gewährleistet.

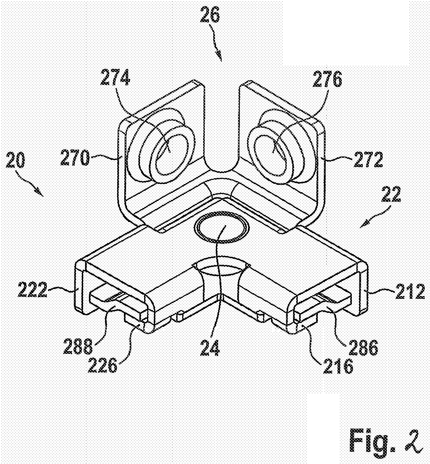

Fig. 2 zeigt eine perspektivische Ansicht des Eckverbinders 20, der aus den Teilen gemäß Fig. 1 besteht. Das erste Blechformteil 22 wird so an das zweite Blechformteil 26 gesetzt, dass die Laschen 216, 226 unter die angehobenen Bereiche 286, 288 des zweiten Blechformteils 26 greifen. Dann wird das erste Blechformteil 22 in Richtung auf die Schenkel 270, 272 des zweiten Blechformteils 26 verkippt, bis die Abkantungen 212, 222 des ersten Schenkels 210 bzw. des zweiten Schenkels 220 über die den Schenkeln 270, 272 benachbarten Kanten der Zentralplatte 260 des zweiten Blechformteils liegen. Das erste Blechformteil 22 und das zweite Blechformteil 26 sind damit - mit eingesetzter Gewindehülse 24 - lagegenau zueinander positioniert.

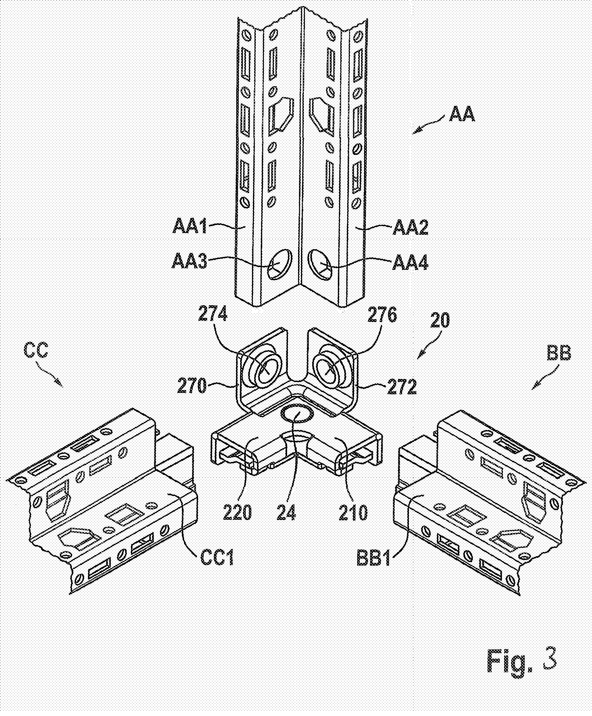

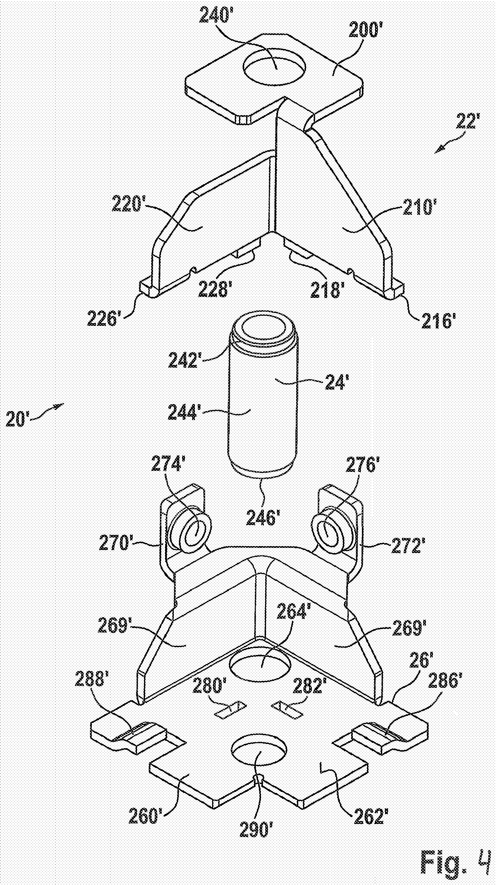

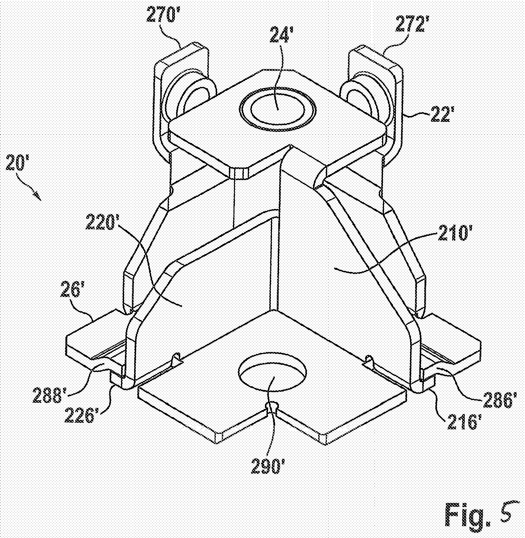

Fig. 3 zeigt in einer schematischen Darstellung, wie drei Profile AA, BB, CC mit Hilfe eines Eckverbinders 20 gemäß den Fig. 4 und 5 zu positionieren und zu verbinden sind. Die Rahmenprofile BB und CC weisen Hohlprofilabschnitte BB1 und CC1 auf, die im Querschnitt an die Außenkontur der Schenkel 210, 220 des Eckverbinders 20 angepasst sind. Durch Einschieben der Schenkel 210, 220 werden dann die Rahmenprofile BB und CC im rechten Winkel zueinander positioniert, wobei der Aufnahmeöffnung 240 bzw. die darin liegende Gewindehülse freigelegt bleibt. Bei der Bausituation der Fig. 6 würden die horizontal liegenden Rahmenprofile BB und CC Bestandteil einer Bodenbaugruppe sein, so dass der Gewindehülse 24 in der Aufnahmeöffnung 240 zur Sockelbefestigung genutzt werden kann. Die aufragenden Schenkel 270, 272 des Eckverbinders 20 sind so bemessen, dass sie zur Anlage an eine Innenwand der Hohlkammerabschnitte Hohlkammerabschnitten AA1 und AA2 des Rahmenprofils AA insofern entsprechen, dass sie im zusammengebauten Zustand an einer Innenwand anliegen, wobei die Durchzüge 274, 276 der jeweiligen Schenkel 270, 272 mit Durchbrüchen AA3, AA4 in den Hohlkammerabschnitten AA1, AA2 fluchten. Entsprechende Durchbrüche befinden sich auf der vom Betrachter abgewandten Seite der Hohlkammerabschnitte AA1, AA2, so dass Gewinde in den Durchzügen sowohl von der Rahmengestellinnenseite als auch von der Rahmengestellaußenseite her zugänglich sind. Nach dem Positionieren und Ausrichten der Rahmenprofile AA, BB und CC können diese mit üblichen Techniken mit dem Eckverbinder 20 verbunden werden, beispielsweise durch Verschweißen oder Verkleben.

Fig. 4 zeigt eine Modifikation der Variante des Eckverbinders 20 gemäß der Fig. 1, wobei der dort in einer Explosionsdarstellung gezeigte Eckverbinder 20' an eine andere Profilgeometrie angepasst ist, insbesondere der eines horizontalen Rahmenprofils im Bodenbereich eines Rahmengestells. Der Eckverbinder 20' besteht aus einem ersten Blechformteil 22', einer Gewindehülse 24' und einem zweiten Blechformteil 26'. Das Blechformteil 22' weist, ausgehend von einem Zentralstück 200', zwei unter einem Winkel von 90° zum Zentralstück 200' stehende Schenkel 210', 220' auf, wobei der Schenkel 210' von einem Eckbereich des Zentralstückes 200' abgekantet ist und der Schenkel 220' sich an den Schenkel 210' unter einem Winkel von 90° anschließt. Die von dem Zentralstück 200' weg weisenden unteren Kanten der Schenkel 210', 220' fluchten. Die Schenkel 210', 220' sind an der jeweiligen unteren Kante im Bereich ihrer freien Enden jeweils zu einer Lasche 216', 226' abgekantet und weisen überdies nahe ihrer Anschlussstelle mit einer nach unten ragenden Nase 218', 228' versehen. Der Schenkel 210' ist in der Draufsicht etwa dreieckförmig, der Schenkel 220' etwa rechteckig mit einem abgeschnittenen Eckbereich gegenüber der Lasche 226'. Andere Geometrien sind möglich. Zwischen der oberen Kante des Schenkels 220' und dem Zentralstück 200' verbleibt ein Abstand. Im Zentralstück 200' ist weiterhin eine Aufnahmeöffnung 240' vorhanden, in die die Gewindehülse 24' eingesetzt wird. Das zweite Blechformteil 26' weist eine Zentralplatte 260' auf, deren Oberfläche im zusammengebauten Zustand des Eckverbinders 20' eine Referenzfläche 262' für das Zentralstück 200' des ersten Blechformteils 22' bildet. In der Zentralplatte 260' ist eine Aufnahmeöffnung 264' gebildet, die in ihren Abmessungen der Aufnahmeöffnung 240' des ersten Blechformteils 22' entspricht und die ebenfalls zur Aufnahme der Gewindehülse 24' vorgesehen ist. Die Gewindehülse 24 weist zwei gegenüberstehende Zentrierbunde 242', 246' auf, die durch einen Mittelbereich 244' verbunden sind. Der Mittelbereich 244' hat eine axiale Länge, die der Höhe des Schenkels 210' entspricht. Die Gewindehülse 24' kann daher beim Zusammenbau in die Aufnahmeöffnungen 240' und 264' greifen und dort verpresst oder verschweißt werden. Im zusammengebauten Zustand des Eckverbinders 20' ist die Gewindehülse 24' durch die Aufnahmeöffnung 240' und die Aufnahmeöffnung 264' zugänglich ist und kann für eine Kranöse oder für die Sockelbefestigung genutzt werden. Von der Zentralplatte 260' des zweiten Blechformteils 26' gehen zwei auf einem gewinkelten Basisabschnitt 269' angeordnete Schenkel 270', 272' aus, die für den Eingriff in ein Rahmenprofil, insbesondere in ein vertikal anzuordnendes Rahmenprofil, ausgelegt sind. Jeder der Schenkel 270', 272' weist einen Durchzug 274', 276', insbesondere einen Gewindedurchzug auf, in die Gewindebolzen, Schrauben oder dergleichen für die Anreihung mehrerer Rahmengestelle oder das Anbringen von Flachteilen aufgenommen werden können. Die Zentralplatte 260' umfasst weiterhin nahezu mittig zwischen der Aufnahmeöffnung 264' und einen dazu diagonal beabstandeten Durchbruch 290' jeweils eine Ausnehmung 280', 282', in die die am ersten Blechformteil 22' vorgesehene Nasen 218', 228' für die exakte Positionierung von dem ersten Blechformteil 22' und dem zweiten Blechformteil 26' relativ zueinander eingesetzt werden. Den Schenkeln 270', 272' gegenüberliegend sind jeweils angehobene Bereiche 286', 288' der Zentralplatte vorgesehen, die beim Zusammenbau von den Laschen 216', 226' des ersten Blechformteils 22' untergriffen werden. Damit ist die Lagegenauigkeit aller Teile des Eckverbinders 20' relativ zueinander gewährleistet.

Fig. 5 zeigt eine perspektivische Ansicht des Eckverbinders 20', der aus den Teilen gemäß Fig.4 besteht. Das erste Blechformteil 22' wird so an das zweite Blechformteil 26' gesetzt, dass die Laschen 216', 226' unter die angehobenen Bereiche 286', 288' des zweiten Blechformteils 26 greifen. Dann wird das erste Blechformteil 22' in Richtung auf die Schenkel 270', 272' des zweiten Blechformteils 26' verkippt, bis die Nasen 218', 228' in den Ausnehmungen 280', 282' (Fig. 7) sitzen. Das erste Blechformteil 22' und das zweite Blechformteil 26' sind damit - mit eingesetzter Gewindehülse 24' - lagegenau zueinander positioniert, und zwar so, dass der Durchbruch 290' zugänglich bleibt, nämlich vor den Schenkeln 210', 220' des ersten Blechformteils 22'. Damit eröffnet der Eckverbinder 20' zusätzliche Montagemöglichkeiten im Innenbereich eines Rahmengestells, bleibt aber als innenliegender Eckverbinder von außen nicht sichtbar.

## Patentansprüche

1. Eckverbinder zum Verbinden mindestens zweier senkrecht zueinander angeordneter Rahmenprofile eines Rahmengestells, der aus mehreren Teilen besteht, von denen wenigstens eines zur Anlage an eines oder mehrere der Rahmenprofile ausgelegt und ein erstes Blechformteil (22, 22') mit einer Aufnahmeöffnung (240, 240') ist, in der oder an der eine Gewindehülse (24, 24') sitzt, wobei die Gewindehülse (24, 24') in der Aufnahmeöffnung (240, 240') verpresst oder in oder an der Aufnahmeöffnung (240, 240') verschweißt ist, wobei das erste Blechformteil (22, 22') zumindest zwei von einem Zentralstück (200, 200') ausgehende, senkrecht zueinander stehende Schenkel (210, 220; 210', 220') zum Eingriff in jeweilige Rahmenprofile und zur Anlage an wenigstens eine Innenwand eines jeweiligen Rahmenprofils aufweist, wobei die Aufnahmeöffnung (240, 240') in das Zentralstück (200, 200') gezogen ist, und wobei ein zweites Blechformteil (26; 26') vorhanden ist, das eine Referenzfläche (262; 262') für das Zentralstück (200; 200') des ersten Blechformteils (22; 22') aufweist, **dadurch gekennzeichnet, dass** die Referenzfläche (262; 262') eine weitere Aufnahmeöffnung (264; 264') aufweist, die in ihren Abmessungen der Aufnahmeöffnung (240; 240') des ersten Blechformteils (22; 22') entspricht, und dass die Gewindehülse (24, 24') in der weiteren Aufnahmeöffnung (264, 264') der Referenzfläche (262, 262') verpresst oder an der oder in der weiteren Aufnahmeöffnung (262, 264') verschweißt ist.

2. Eckverbinder nach Anspruch 1, **dadurch gekennzeichnet, dass** von der Referenzfläche (262) wenigstens ein Schenkel (270, 272; 270', 272') zum Eingriff in ein drittes Rahmenprofil (AA) ausgeht.

3. Eckverbinder nach Anspruch 2, **dadurch gekennzeichnet, dass** der wenigstens eine Schenkel (270, 272; 270', 272') einen Durchzug (274, 276; 274', 276'), insbesondere einen Gewindedurchzug, aufweist.

4. Eckverbinder nach Anspruch 1, **dadurch gekennzeichnet, dass** die Schenkel (210, 220) des ersten Blechformteils (22) abgekantet sind.

5. Eckverbinder nach Anspruch 1, **dadurch gekennzeichnet, dass** die Schenkel (210', 220') oder die abgekanteten Bereiche (214, 224) der Schenkel (210, 220) Laschen (216, 226; 216', 226') aufweisen und dass die Referenzfläche (262, 262') auf einer Zentralplatte (260, 260') gebildet ist, die so konturiert ist, dass sie auf den Laschen (216, 226; 216', 226') des ersten Blechformteils (22; 22') liegt.

6. Eckverbinder nach einem der voranstehenden Ansprüche, **dadurch gekennzeichnet, dass** die Zentralplatte (260') einen Durchbruch (290') aufweist, der bei auf den Eckverbinder aufgesetzten Rahmenprofilen zugänglich bleibt.

## Claims

1. A corner connector for connecting at least two frame profiles of a frame rack which are arranged perpendicular to each other, the corner connector consisting of a plurality of pieces, at least one of which is designed to bear against one or more of the frame profile and is a first molded sheet metal part (22, 22') with a receiving opening (240, 240'), in which or on which a threaded sleeve (24, 24') is situated, wherein the threaded sleeve (24, 24') is press-fitted in the receiving opening (240, 240') or welded in or on the receiving opening (240, 240'), wherein the first molded sheet metal part (22, 22') has at least two legs (210, 220; 210', 220') emerging from a central piece (200, 200') and being perpendicular to each other, for engaging with the respective frame profile and for bearing against at least one inner wall of a respective frame profile, wherein the receiving opening (240, 240') is drawn into the central piece (200, 200'), and wherein a second molded sheet metal part (26, 26') is provided, which has a reference surface (262; 262') for the central piece (200; 200') of the first molded sheet metal part (22; 22'), **characterized in that** the reference surface (262; 262') has another receiving opening (264; 264'), which corresponds in its dimensions to the receiving opening (240; 240') of the first molded sheet metal part (22; 22'), and that the threaded sleeve (24; 24') is press-fitted in the additional receiving opening (264, 264') of the reference surface(262, 262') or welded on or in the additional receiving opening (264, 264').

2. The corner connector according to claim 1, **characterized in that** at least one leg (270, 272; 270', 272') emerges from the reference surface (262) for engagement with a third frame profile (AA).

3. The comer connector according to claim 2, **characterized in that** the at least one leg (270, 272; 270', 272') has a passage (274, 276; 274', 276'), especially a threaded passage.

4. The corner connector according to claim 1, **characterized in that** the legs (210, 220) of the first molded sheet metal part (22) are bent.

5. The corner connector according to claim 1, **characterized in that** the legs (210', 220') or the bent regions (214, 224) of the legs (210, 220) have lugs (216, 226; 216', 226') and that the reference surface (262, 262') is formed on a central plate (260, 260'), which is contoured so that it lies against the lugs (216, 226; 216', 226') of the first molded sheet metal part (22; 22').

6. The corner connector according to any of the preceding claims, **characterized in that** the central plate (260') has an opening (290') which remains accessible when the frame profiles are placed on the comer connector.

## Revendications

1. Raccord d'angle pour la liaison d'au moins deux profilés de cadre, disposés perpendiculairement l'un par rapport à l'autre, d'un châssis constitué de plusieurs parties, dont au moins une est conçue pour l'appui contre un ou plusieurs des profilés de cadres et est une première pièce profilée en tôle (22, 22'), avec une ouverture de logement (240, 240'), dans laquelle ou sur laquelle se trouve un manchon taraudé (24, 24'), le manchon taraudé (24, 24') étant comprimé dans l'ouverture de logement (240, 240') ou étant soudé dans ou sur l'ouverture de logement (240, 240'), la première pièce profilée en tôle (22, 22') comprenant au moins deux branches (210, 220 ; 210', 220'), perpendiculaires entre elles, partant d'une pièce centrale (200, 200'), destinées à être emboîtées dans des profilés de cadres correspondants et conçues pour s'appuyer contre au moins une paroi interne d'un profilé de cadre correspondant, l'ouverture de logement (240, 240') étant tirée dans la pièce centrale (200, 200') et une deuxième pièce profilée en tôle (26 ; 26') étant prévue, qui comprend une surface de référence (262 ; 262') pour la pièce centrale (200 ; 200') de la première pièce profilée en tôle (22 ; 22'),
**caractérisé en ce que** la surface de référence (262 ; 262') comprend une autre ouverture de logement (264 ; 264') qui correspond, en ce qui concerne ses dimensions, à l'ouverture de logement (240 ; 240') de la première pièce profilée en tôle (22 ; 22') et **en ce que** le manchon taraudé (24, 24') est comprimé dans l'autre ouverture de logement (264, 264') de la surface de référence (262, 262') ou est soudé sur ou dans l'autre ouverture de logement (262, 264').

2. Raccord d'angle selon la revendication 1, **caractérisé en ce que**, de la surface de référence (262), part au moins une branche (270, 272 ; 270', 272') destinée à être emboîtée dans un troisième profilé de cadre (AA).

3. Raccord d'angle selon la revendication 2, **caractérisé en ce que** l'au moins une branche (270, 272 ; 270', 272') comprend un passage (274, 276 ; 274', 276'), plus particulièrement un passage taraudé.

4. Raccord d'angle selon la revendication 1, **caractérisé en ce que** les branches (210, 220) de la première pièce profilée en tôle (22) sont pliées.

5. Raccord d'angle selon la revendication 1, **caractérisé en ce que** les branches (210', 220') ou les parties pliées (214, 224) des branches (210, 220) comprennent des pattes (216, 226 ; 216', 226') et **en ce que** la surface de référence (262, 262') est formée sur une plaque centrale (260, 260') qui présente un contour tel qu'elle repose sur les pattes (216, 226 ; 216', 226') de la première pièce profilée en tôle (22 ; 22').

6. Raccord d'angle selon l'une des revendications précédentes, **caractérisé en ce que** la plaque centrale (260') comprend un passage (290') qui reste accessible lorsque les profilés de cadres sont posés sur le raccord d'angle.
